# EUROPÄISCHE PATENTANMELDUNG

(11) **EP 2 053 261 A2**
(43) Veröffentlichungstag der Anmeldung: **29.04.2009**
(21) Anmeldenummer: 08018539.0
(22) Anmeldetag: 23.10.2008
(51) Int. Cl.: F16D 48/04

(54) **Kupplungskraftverstärker**

(30) Priorität: 25.10.2007 DE 102007051148
(71) Anmelder: KNORR-BREMSE Systeme für Nutzfahrzeuge GmbH, 80809 München (DE)
(72) Erfinder: Prokes, Tomas, 46014 Liberec XIV (CZ); Tschewik, Herbert, 85229 Markt Indersdorf (DE)
(74) Vertreter: Schönmann, Kurt

(57) **Zusammenfassung**

Die Erfindung betrifft einen Kupplungskraftverstärker (10), mit einem Verstärkerkolben (60), der mittels Pneumatikdruck verschiebbar ist, um eine Kupplungskraft zu verstärken, und einem Steuerkolben (22), der mittels Hydraulikdruck verschiebbar ist und über dessen Stellung der Pneumatikdruck steuerbar ist, mit dem der Verstärkerkolben (60) beaufschlagbar ist.

Erfindungsgemäß ist vorgesehen, dass sich die Richtung, in der der Steuerkolben (22) verschiebbar ist, von der Richtung, in der der Verstärkerkolben (60) verschiebbar ist, unterscheidet.

## Beschreibung

Die Erfindung betrifft einen Kupplungskraftverstärker, mit einem Verstärkerkolben, der mittels Pneumatikdruck verschiebbar ist, um eine Kupplungskraft zu verstärken, und einem Steuerkolben, der mittels Hydraulikdruck verschiebbar ist und über dessen Stellung der Pneumatikdruck steuerbar ist, mit dem der Verstärkerkolben beaufschlagbar ist.

Kupplungskraftverstärker kommen in Nutzfahrzeugen zum Einsatz, um eine Kupplungspedalfußkraft mittels Pneumatikdruck zu verstärken, da Kupplungen von Nutzfahrzeugen in der Regel nur unter großem Kraftaufwand betätigbar sind.

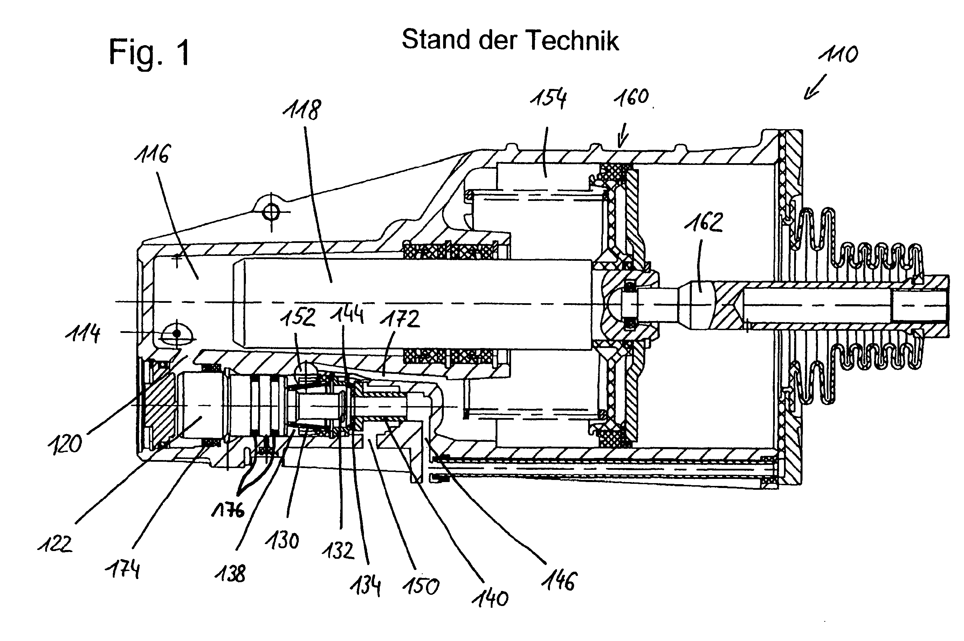

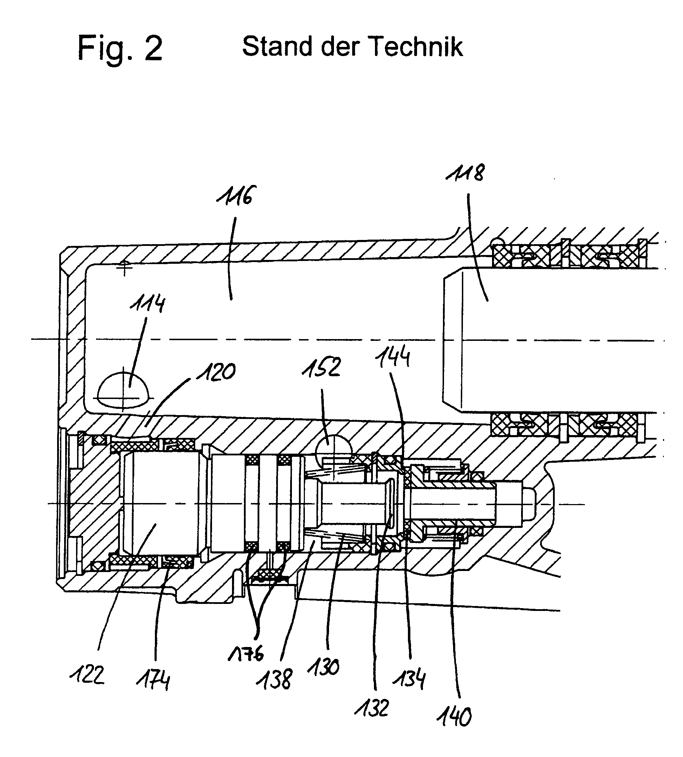

Die Figuren 1 und 2 zeigen einen Kupplungskraftverstärker 110 vom Stand der Technik. Bei diesem Kupplungskraftverstärker 110 wird bei Betätigung eines nicht dargestellten Kupplungspedals mittels Fußkraft über einen nicht dargestellten Geberzylinder Hydraulikflüssigkeit, die insbesondere Bremsflüssigkeit sein kann, über einen Hydraulikanschluss 114 einem Hydraulikraum 116 zugeführt, in dem eine Kolbenstange 118 verschiebbar aufgenommen ist. Über einen Hydraulikdurchgang 120 gelangt die Hydraulikflüssigkeit beziehungsweise die Bremsflüssigkeit zu einem Steuerbereich des Kupplungskraftverstärkers 110. Im Steuerbereich ist ein Steuerkolben 122 angeordnet, der durch die linksseitige Hydraulikdruckbeaufschlagung nach rechts (Richtungsangaben wie "rechts", "links", "oben" und "unten" beziehen sich in dieser Beschreibung jeweils auf die Richtung in der entsprechenden Figur) entgegen der Federkraft einer Rückstellfeder 130 verschoben wird. Durch diese Verschiebung nach rechts sitzt ein Ventilsitz 132 auf einem Ventilteller 134 auf, der als plattenartiger Gummiring ausgeführt ist. Durch dieses Aufsitzen des Ventilsitzes 132 auf dem Ventilteller 134 wird eine Verbindung zwischen einem Pneumatikausgang 146 und einem Steuerraum 138 unterbrochen (der Pneumatikausgang 146 ist nur in Figur 1 und nicht in Figur 2 dargestellt). Der Ventilsitz 132 schiebt den Ventilteller 134 zusammen mit einer Hülse 140 nach rechts, so dass der Ventilteller 134 von einem Ventilsitz 144 abgehoben wird, um eine Verbindung zwischen einem Pneumatikeingang 150 und einer Pneumatikdurchgangsmündung 152 freizugeben (der Pneumatikeingang 150 ist nur in Figur 1 und nicht in Figur 2 dargestellt). Durch dieses Freigeben strömt Druckluft vom Pneumatikeingang 150, über den Steuerraum 138, die Pneumatikdurchgangsmündung 152 und einen Pneumatikdurchgang 172 (der nur in Figur 1 dargestellt ist) in einen Primärraum 154, so dass ein Verstärkerkolben 160 samt Kolbenstange 118 und einem Stößel 162 nach rechts verschoben wird, um eine nicht dargestellte Kupplung unter Verstärkung mittels Pneumatikdruck zu betätigen. Proportional zum Druck am Hydraulikanschluss 114 und damit zur Fußkraft baut sich der Luftdruck am Verstärkerkolben 160 soweit auf, bis die Ausrückkraft der Kupplung erreicht ist. Der Stößel 162 fährt dabei aus und betätigt die Kupplung, solange durch weiteres Durchdrücken des Kupplungspedals das erforderliche Arbeitsvolumen an Hydraulikflüssigkeit beziehungsweise Bremsflüssigkeit vom Geberzylinder in den Hydraulikraum 116 gedrückt wird. Wird das Kupplungspedal vom Fahrer zurückgenommen, dann kann über den Hydraulikanschluss 114 die Hydraulikflüssigkeit beziehungsweise Bremsflüssigkeit aus dem Hydraulikraum 116 entweichen und der Steuerkolben 122 wird durch die Federkraft der Rückstellfeder 130 nach links zurück in seine Ausgangsposition verschoben. Durch diese Verschiebung nach links hebt sich der Ventilsitz 132 vom Ventilteller 134 ab, und gibt die Verbindung zwischen Steuerraum 138 und Pneumatikausgang 146 frei. Die Verbindung zwischen Pneumatikeingang 150 und Steuerraum 138 wird dadurch geschlossen, dass der Ventilteller 134 auf dem Ventilsitz 144 aufsitzt. Als Ergebnis kann die Druckluft aus dem Primärraum 154 über den Pneumatikdurchgang 172, den Steuerraum 138 und den Pneumatikausgang 146 an die Umgebung entweichen. Die Kraft, die den Verstärkerkolben 160 dabei nach links verschiebt ist die Rückstellkraft der Kupplung selbst. Bei Ausfall der Druckluft kann mit erhöhter Fußkraft gekuppelt werden, wobei der über den Hydraulikanschluss 114 eingesteuerte Hydraulikdruck die Kolbenstange 118 direkt beaufschlagt.

Dieser dargestellte Stand der Technik leidet jedoch an folgenden Nachteilen. Die Herstellung des Gehäuses ist relativ aufwendig, einerseits müssen über entsprechende Gusskerne Räume für die Einbauten geschaffen werden und andererseits müssen nach dem Gießen Arbeitsbohrungen von außen eingebohrt werden. Beispiele solcher Arbeitsbohrungen sind der Hydraulikdurchgang 120 oder die Pneumatikdurchgangsmündung 152. Insbesondere die Pneumatikdurchgangsmündung 152 muss von außen durch das komplette Gehäuse hindurch eingebohrt werden. Anschließend muss diese durch das komplette Gehäuse reichende Bohrung wieder mit Schrauben und Dichtungen abgedichtet werden, um im Betrieb ein Entweichen von Druckluft zu verhindern.

Ein weiterer Nachteil besteht darin, dass im Dauerbtrieb zwischen Steuerkolben 122 und seiner Führung Riefen entstehen können, da der aus Aluminium hergestellte Steuerkolben 122 am ebenfalls aus Aluminium hergestellten Gehäuse des Kupplungskraftverstärkers 110, insbesondere nach Eindringen von Verunreinigungen durch unsachgemäße Wartung, reibt, was zu erhöhtem Verschleiß führen würde.

Ein problematischer Aspekt des Standes der Technik besteht in der Trennung des Hydraulikkreises vom Pneumatikkreis. Diese Trennung wurde im Stand der Technik durch einen als Dichtelement beziehungsweise Dichtring ausgeführten Nutring 174 verwirklicht. Problematisch ist dabei jedoch, dass derartige Dichtringe üblicherweise auf Hydraulikflüssigkeit wie beispielsweise Bremsflüssigkeit ausgelegt sind, jedoch auch mit Ölrückständen der Pneumatik- beziehungsweise Druckluftseite in Kontakt gelangen können. Diese Ölrückstände können beispielsweise von einer Ölschmierung eines Kompressors zur Druckluftbeschaffung herrühren. Aufgrund der Ölrückstände kann es als Folge an dieser Stelle zu Quellproblemen des Dichtelements kommen, die wiederum zu Undichtigkeiten und einem verstärkten Verschleiß des Dichtelements führen können. Um diese Quellprobleme des Nutrings 174 zumindest teilweise zu unterbinden, werden gemäß dem Stand der Technik beispielsweise ein oder mehrere O-Ringdichtungen 176 verwendet, die an dem Steuerkolben 122 zwischen dem Nutring 174 und der Pneumatikseite angeordnet werden und vorzugsweise aus Nitrilkautschuk (NBR) ausgebildet sind. Diese O-Ringdichtungen 176 sind insbesondere als Schutz des Nutrings 174 vor den in der Druckluft enthaltenen Ölrückständen vorgesehen. Dennoch kann durch Verschleiß der O-Ringdichtungen 176 nicht gänzlich ausgeschlossen werden, dass die Ölrückstände mit dem Nutring 174 in Berührung kommen, wodurch wiederum die vorgenannten Quellprobleme auftreten können.

Ein weiterer Nachteil des Standes der Technik besteht darin, dass herstellungsbedingt an der gegossenen Trennwand zwischen Steuerraum 138 und Hydraulikraum 116 Porositäten auftreten können, die bei der Materialprüfung nur schwer entdeckt werden können. Im Dauerbetrieb könnten solche Porositäten im schlimmsten Fall theoretisch dazu führen, dass Druckluft in winzigen Mengen vom Steuerraum 138 durch diese Porositäten hindurch in den Hydraulikraum 116 diffundiert und sich somit mit der Hydraulikflüssigkeit vermengt. Eine Folge wäre eine verschlechterte Steuerbarkeit des Kupplungskraftverstärkers mittels Hydraulikflüssigkeit.

Es ist daher die Aufgabe der vorliegenden Erfindung den gattungsgemäßen Kupplungskraftverstärker derart weiterzubilden, dass die vorstehenden Probleme zumindest teilweise gelöst werden.

Diese Aufgabe wird durch den Kupplungskraftverstärker gemäß Anspruch 1 gelöst.

Vorteilhafte Ausgestaltungen und Weiterbildungen der Erfindung ergeben sich aus den abhängigen Ansprüchen.

Der erfindungsgemäße Kupplungskraftverstärker baut auf dem gattungsgemäßen Stand der Technik dadurch auf, dass sich die Richtung, in der der Steuerkolben verschiebbar ist, von der Richtung, in der der Verstärkerkolben verschiebbar ist, unterscheidet. Durch eine derartige Auslegung können erforderliche Durchgänge, wie beispielsweise Hydraulikdurchgänge zum Druckbeaufschlagen des Steuerkolbens oder andere Verbindungsleitungen in Entformungsrichtung des Druckgusswerkzeugs liegen, d.h. in der Richtung, in der eine Druckgussform entfernt wird. Somit können diese Durchgänge gegossen werden und müssen nicht mehr nachträglich gebohrt werden, so dass ein zusätzlicher Arbeitsschritt entfällt. Das Einbringen von Arbeitsbohrungen von Außen, wie beim Stand der Technik, die auch noch abzudichten waren, kann somit entfallen. Ferner bietet die vorliegende Auslegung auch den Vorteil, dass der Steuerbereich vom Hydraulikraum nicht länger nur durch eine Gehäusewand getrennt wird, bei der Porositäten bestehen können. Eine Ausrichtung dahingehend, dass sich die Verschieberichtung des Steuerkolbens von der Verschieberichtung des Verstärkerkolbens unterscheidet, ermöglicht, den Steuerbereich so anzuordnen, dass nur eine relativ kleine Stirnfläche des Steuerkolbens und somit auch eine kleine Stirnfläche des den Steuerkolben aufnehmenden Raums hin zum Hydraulikraum gewandt ist, die sich mit geringem Aufwand beispielsweise mittels einer Membran abdichten lässt. Darüber hinaus ermöglicht diese Auslegung auch, dass der Hydraulikbereich außer einem Hydraulikanschluss selbst keine Verbindung zu einem Gehäuseaußenbereich aufweist, wohingegen beim Stand der Technik aufgrund der achsparallelen Ausrichtung von Verstärkerkolben und Steuerkolben eine Montageöffnung für den Steuerkolben vorgesehen sein musste, die im Betrieb gegen Entweichen von Hydraulikflüssigkeit abgedichtet sein muss. Die vorstehend beschriebenen Vorteile können dadurch erreicht werden, dass das technische Vorurteil einer achsparallelen Ausrichtung von Steuerkolben und Verstärkerkolben überwunden wurde. Dabei zeigen sich die Vorteile umso besser, je mehr die Ausrichtung einer senkrechten Ausrichtung von Verschieberichtung des Steuerkolbens und Verschieberichtung des Verstärkerkolbens angenähert wird.

Daher lassen sich die vorstehenden Vorteile in verbesserter Weise dadurch erreichen, dass die Richtung, in der der Steuerkolben verschiebbar ist, und die Richtung, in der der Verstärkerkolben verschiebbar ist, einen Winkel zwischen 45 und 135 Grad einschließen.

Noch besser lassen sich die vorstehenden Vorteile dadurch erreichen, dass die Richtung, in der der Steuerkolben verschiebbar ist, und die Richtung, in der der Verstärkerkolben verschiebbar ist, einen Winkel zwischen 80 und 100 Grad einschließen.

Nahezu optimal lassen sich diese Vorteile dadurch erreichen, dass die Richtung, in der der Steuerkolben verschiebbar ist, und die Richtung, in der der Verstärkerkolben verschiebbar ist, einen Winkel zwischen 85 und 95 Grad einschließen.

In optimaler Weise können die vorstehend beschriebenen Vorteile erreicht werden, wenn vorgesehen ist, dass die Richtung, in der der Steuerkolben verschiebbar ist, senkrecht zur Richtung ist, in der der Verstärkerkolben verschiebbar ist.

Ferner ist vorteilhafterweise vorgesehen, dass der Raum, in dem der Steuerkolben aufgenommen ist, über eine Membran gegen einen Hydraulikraum zur Aufnahme von Hydraulikflüssigkeit abgedichtet ist mittels der der Steuerkolben zur Steuerung des Pneumatikdrucks beaufschlagbar ist. Dadurch wird der Hydraulikbereich vom Pneumatikbereich entkoppelt, wobei die Membran die Trennlinie zwischen diesen Bereichen bildet. Dadurch kann ein Durchschleifen von Hydraulikflüssigkeit, wie bei den bisherigen ringförmigen Abdichtungen verhindert werden. Die Membran am äußeren Rand wird somit nicht gegenüber der Innenwand des den Steuerkolben aufnehmenden Gehäusehohlraums bewegt, so dass ohne diese Relativbewegung eine bessere Dichtwirkung erreicht werden kann. Außerdem kann durch die Vermeidung des Durchschleifens von Hydraulikflüssigkeit ein Quellen der NBR-Dichtelemente (Nitrilkautschuk-Dichtelemente) verhindert werden. Ebenfalls wird ein Benetzen der EPDM-Dichtelemente (Ethylen-Propylen-Dien-Kautschuk Dichtelemente) mit ölhaltiger Druckluft verhindert, was ebenfalls ein Quellen zur Folge hätte. Darüber hinaus kann durch die optimale Trennung von Hydraulikbereich und Pneumatikbereich an der krafteinleitenden Stirnfläche des Steuerkolbens, eine Dichtwirkung am Außenumfang des Steuerkolbens vernachlässigt werden. Der Steuerkolben muss somit nicht mehr als Aluminiumkolben ausgeführt sein, was im Stand der Technik notwendig war. Somit können auch andere Werkstoffe zum Einsatz kommen, die eine abriebfreie Führung zulassen.

Des Weiteren kann der erfindungsgemäße Kupplungskraftverstärker so weitergebildet sein, dass zur Führung des Steuerkolbens zumindest eine Führungshülse zwischen dem Steuerkolben und einem Gehäuse des Kupplungskraftverstärkers vorgesehen ist. Dadurch können die Gleiteigenschaften des Steuerkolbens verbessert werden, so dass kein Abrieb am Steuerkolben entsteht.

In diesem Zusammenhang kann vorgesehen sein, dass die Führungshülse aus Kunststoff hergestellt ist. Dieser Werkstoff kann ideale Gleiteigenschaften bereitstellen.

Ferner kann vorgesehen sein, dass die Membran durch die Führungshülse fixiert wird. Dadurch hat die Führungshülse eine Doppelwirkung. Einerseits verbessert sie die Gleiteigenschaften des Steuerkolbens und andererseits fixiert sie die Membran, so dass die Membran keinerlei Relativbewegung gegenüber der Innenwand des den Steuerkolben aufnehmenden Gehäusehohlraums ausführt.

Außerdem kann der erfindungsgemäße Kupplungskraftverstärker derart weitergebildet sein, dass ein Hydraulikdurchgang, zum einseitigen Beaufschlagen der Membran mit Hydraulikdruck, in der Richtung verläuft, in der der Steuerkolben verschiebbar ist. Somit können die Hydraulikdurchgänge so ausgelegt werden, dass sie in Entformungsrichtung der Druckgussform verlaufen oder sie können leicht zusammen mit dem Gehäusehohlraum zur Aufnahme des Steuerkolbens in einem Fertigungsschritt mittels Zerspanungstechnik ausgebildet werden.

Ferner kann vorgesehen sein, dass der Verstärkerkolben des Weiteren durch eine Kolbenstange betätigbar ist, welche wiederum mit demselben Hydraulikdruck beaufschlagbar ist wie der Steuerkolben. Somit ist die Kupplung auch bei Ausfall der Druckluftquelle über die Kolbenstange betätigbar.

Eine bevorzugte Ausführungsform der Erfindung wird nachfolgend mit Bezug auf die begleitenden Zeichnungen beispielhaft erläutert.

Es zeigen:
- Figur 1: einen Kupplungskraftverstärker vom Stand der Technik;
- Figur 2: einen Detailausschnitt des in Figur 1 dargestellten Kupplungskraftverstärkers vom Stand der Technik;
- Figur 3: einen erfindungsgemäßen Kupplungskraftverstärker; und
- Figur 4: einen Detailausschnitt des erfindungsgemäßen Kupplungskraftverstärkers aus Figur 3.

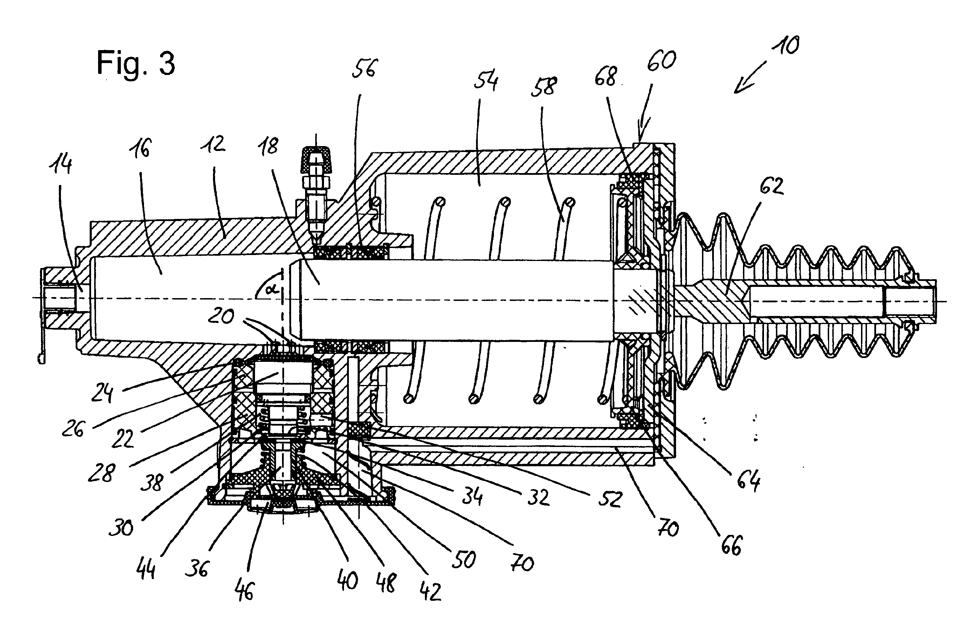

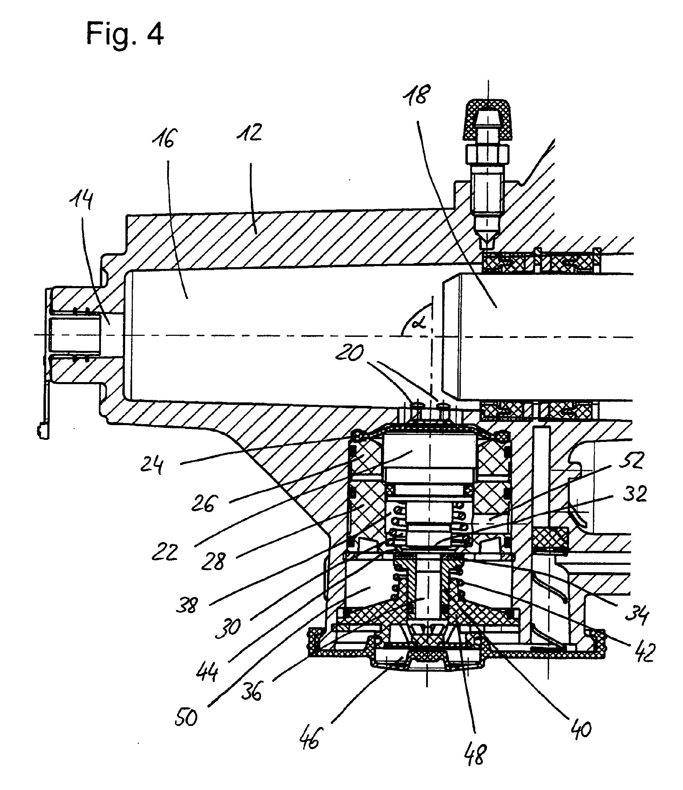

Die Figuren 3 und 4 zeigen den erfindungsgemäßen Kupplungskraftverstärker 10, wobei in Figur 4 der wesentliche Teil des Kupplungskraftverstärkers 10 vergrößert dargestellt ist. Die Grundstruktur des Kupplungskraftverstärkers 10 wird durch ein Gehäuse 12 gebildet, welches ein Gussteil ist, das vorzugsweise aus Aluminium hergestellt ist. Ein Hydraulikanschluss 14 ist mit einem nicht dargestellten Geberzylinder eines nicht dargestellten Kupplungspedals verbunden. In der Darstellung gemäß Figur 3 und 4 ist der Hydraulikanschluss 14 für die Auslieferung mit einer Schutzkappe versehen. Über den Hydraulikanschluss 14 kann eine Hydraulikflüssigkeit in einen Hydraulikraum 16 gelangen, in dem eine Kolbenstange 18 des Kupplungskraftverstärkers verschiebbar aufgenommen ist. Über Hydraulikdurchgänge 20 ist der Hydraulikraum 16 mit einem Steuerbereich des Kupplungskraftverstärkers 10 verbunden. Das Kernelement des Steuerbereichs ist ein Steuerkolben 22, der verschiebbar im Steuerbereich angeordnet ist. Die Längsrichtung des Steuerkolbens 22, d.h. seine Schieberichtung, ist dabei vorzugsweise senkrecht zur Längsrichtung, d.h. Schieberichtung, der Kolbenstange 18 angeordnet. In anderen Worten ausgedrückt schließt ein Winkel α der zwischen der Schieberichtung der Kolbenstange 18 und der Schieberichtung des Steuerkolbens 22 eingeschlossen wird vorzugsweise 90 Grad ein - er kann jedoch auch mehr oder weniger betragen. Der Steuerkolben 22 ist vorzugsweise aus Kunststoff hergestellt, kann jedoch auch aus Aluminium gefertigt sein. Der Gehäusehohlraum, in dem der Steuerkolben 22 aufgenommen ist, ist mittels einer Membran 24, die aus einem elastischen Material wie beispielsweise Gummi ausgebildet ist, gegen den Hydraulikraum 16 und somit gegen die durch die Hydraulikdurchgänge 20 einströmende Hydraulikflüssigkeit abgedichtet. Zwischen der Innenwand des Gehäusehohlraums, in dem der Steuerkolben 22 aufgenommen ist, und dem Steuerkolben 22 sind Führungshülsen 26, 28 aufgenommen, die vorzugsweise aus Kunststoff hergestellt sind. Diese Führungshülsen sind mittels O-Ringen gegen die Innenwand des den Steuerkolben aufnehmenden Gehäusehohlraums abgedichtet. Die Führungshülse 26 fixiert die Membran 24 und führt den Steuerkolben 22. Ferner ist eine Rückstellfeder 30 vorgesehen, welche den Steuerkolben 22 bei vermindertem Hydraulikdruck in dem Hydraulikraum 16 in seine Ausgangsposition, die in Figur 3 und 4 dargestellt ist, zurückschiebt. Ein Ventilsitz 32 des Steuerkolbens 22 wirkt mit einem Ventilteller 34 derart zusammen, dass ein Entlüftungsdurchgang 36 bei Aufsitzen des Ventilsitzes 32 auf den Ventilteller 34 von einem Steuerraum 38 getrennt wird, in dem auch die Rückstellfeder 30 angeordnet ist. Der Ventilteller ist als ein plattenartiger Gummiring ausgebildet. Der Entlüftungsdurchgang 36 ist im Inneren einer Hülse 40 ausgebildet, welche mit dem Ventilteller 34 in Kontakt ist. Die Hülse 40 wiederum wird mittels einer Rückstellfeder 42 nach oben, hin zu einem Ventilsitz 44 vorgespannt. Der Entlüftungsdurchgang 36 steht über eine Entlüftung 46 mit der Umgebung in Verbindung, so dass über den Entlüftungsdurchgang 36 und die Entlüftung 46 Druckluft aus dem Steuerraum 38 an die Umgebung abgegeben werden kann. Die Hülse 40 wird von einer Führungshülse 48 umgeben, welche aus Kunststoff ausgebildet ist und zwischen der Hülse 40 und der Innenwand des den Steuerkolben 22 aufnehmenden Gehäusehohlraums angeordnet ist. Ein Pneumatikeingangsraum 50 ist über einen durch die Wandung des Gehäuses 12 führenden und nicht dargestellten Anschluss mit einem nicht dargestellten Druckluftkreis bzw. einer Druckluftquelle verbunden. Im Zustand, der in den Figuren 3 und 4 dargestellt ist, sitzt der Ventilteller 34 auf dem Ventilsitz 44 auf, so dass dieser Pneumatikeingangsraum 50 nicht mit dem Steuerraum 38 verbunden ist. Drückt jedoch der Ventilsitz 32 den Ventilteller 34 nach unten, so wird nicht nur der Entlüftungsdurchgang 36 vom Steuerraum 38 getrennt, sondern auch der Pneumatikeingangsraum 50 mit dem Steuerraum 38 verbunden. Der Steuerraum 38 ist über eine Pneumatikdurchgangsmündung 52 und einem sich von dieser erstreckenden und nicht dargestellten Pneumatikdurchgang mit einem Verstärkerraum bzw. Primärraum 54 des Kupplungskraftverstärkers 10 verbunden. Der Primärraum 54 ist mittels Dichtungen 56 gegen den Hydraulikraum 16 abgedichtet. Im Primärraum 54 ist eine Feder 58 angeordnet, die einen Verstärkerkolben 60 leicht nach rechts vorspannt, so dass ein Stößel 62, der zum Betätigen der Kupplung vorgesehen ist, an entsprechenden Bauteilen anliegt, ohne diese zu betätigen. Die Kolbenstange 18, der Verstärkerkolben 60 und der Stößel 62 sind aneinander befestigt und entlang einer gemeinsamen Achse ausgerichtet, die auch der Richtung entspricht, in der diese Bauteile verschiebbar sind. Der Verstärkerkolben 60 ist aus einer Stützscheibe 64 und einer Kunststoffscheibe 66 aufgebaut, die entsprechend über eine Dichtung 68 gegen die Innenwand des Raumes abgedichtet sind, in welchem der Verstärkerkolben 60 angeordnet ist. Im Falle einer Druckluftzufuhr zum Primärraum 54 schiebt der Pneumatikdruck den Verstärkerkolben 60 nach rechts, so dass über den Stößel 62 die entsprechende nicht dargestellte Kupplung betätigt wird. Die im Raum rechts vom Verstärkerkolben befindliche Druckluft kann beim rechtsseitigen Verschieben des Verstärkerkolbens 60 über eine Sekundärraumentlüftung 70 an die Umgebung entweichen.

Im Folgenden wird der Betrieb des erfindungsgemäßen Kupplungskraftverstärkers 10 beschrieben. Bei Betätigung des nicht dargestellten Kupplungspedals mittels Fußkraft wird über den nicht dargestellten Geberzylinder Hydraulikflüssigkeit über den Hydraulikanschluss 14 in den Hydraulikraum 16 zugeführt. Über die Hydraulikdurchgänge 20 drückt der Hydraulikdruck über die Membran 24 den Steuerkolben 22 entgegen der Federkraft der Rückstellfeder 30 nach unten. Dabei bildet sich oberhalb der Membran 24 ein mit Hydraulikflüssigkeit gefüllter Raum aus, der durch die Membran 24 vom Gehäusehohlraum getrennt wird, in dem der Steuerkolben 22 aufgenommen ist. Wird der Steuerkolben 22 derart nach unten verschoben, dann sitzt der Ventilsitz 32 des Steuerkolbens 22 auf dem Ventilteller 34 auf, so dass der Entlüftungsdurchgang 36 vom Steuerraum 38 getrennt wird. Ein Entweichen von Druckluft kann somit nicht mehr stattfinden. Durch dieses Aufsitzen und das weitere nach unten Schieben des Steuerkolbens 22 hebt sich der Ventilteller 34 vom Ventilsitz 44 ab, so dass eine Verbindung zwischen dem Pneumatikeingangsraum 50 und dem Steuerraum 38 freigegeben wird. Durch diese Verbindung kann Druckluft vom Pneumatikeingangsraum 50 in den Steuerraum 38 und weiter über die Pneumatikdurchgangsmündung 52 und den nicht dargestellten Pneumatikdurchgang in den Primärraum 54 strömen. Dieser Aufbau von Pneumatikdruck im Primärraum 54 verschiebt den Verstärkerkolben 60 nach rechts in die in Fig. 3 dargestellte Position. (Der Grund, dass in der Darstellung nach Figur 3 der Verstärkerkolben 60 bereits in der rechten Position ist, obwohl laut Darstellung der Figur 3 der Entlüftungsdurchgang 36 geöffnet ist, liegt darin begründet, dass Figur 3 einen Auslieferzustand des Kupplungskraftverstärkers darstellt, in dem weder Hydraulik- noch Pneumatikkräfte wirken und alle beweglichen Teile entsprechend ihren Vorspannfedern in entsprechende Positionen gedrückt werden.) Durch diese Bewegung des Verstärkerkolbens 60 nach rechts wird über den mit dem Verstärkerkolben 60 verbundenen Stößel 62 eine nicht dargestellte Kupplung betätigt. Proportional zum Druck am Hydraulikanschluss 14 und damit zur Fußkraft baut sich der Luftdruck am Verstärkerkolben 60 soweit auf, bis die Ausrückkraft der Kupplung erreicht ist. Der Stößel 62 fährt dabei aus und betätigt die Kupplung, solange durch weiteres Durchdrücken des Kupplungspedals das erforderliche Arbeitsvolumen an Hydraulikflüssigkeit vom Geberzylinder in den Hydraulikraum 16 gedrückt wird.

Wird das Kupplungspedal durch den Fahrer freigegeben, dann kann der Hydraulikdruck aus dem Hydraulikraum 16 über den Hydraulikanschluss 14 zumindest teilweise entweichen. Durch diesen Hydraulikdruckabbau und die Federkraft der Rückstellfeder 30 strömt die Hydraulikflüssigkeit direkt oberhalb der Membran 24 durch die Hydraulikdurchgänge 20 zurück in den Hydraulikraum 16. Der Steuerkolben 22 wird durch die Rückstellfeder 30 nach oben verschoben, so dass sich der Ventilsitz 32 vom Ventilteller 34 abhebt und der Ventilteller 34 samt Hülse 40 über die Rückstellfeder 42 nach oben geschoben wird, so dass der Ventilteller 34 auf dem Ventilsitz 44 aufsitzt. Dadurch wird der Steuerraum 38 von dem Pneumatikeingangsraum 50 getrennt, so dass keine Druckluft mehr in den Steuerraum 38 und somit in den Primärraum 54 zuströmen kann. Stattdessen wird der Primärraum 54 über den Steuerraum 38 und den Entlüftungsdurchgang 36, der nun mit dem Steuerraum 38 in Verbindung steht, entlüftet. Durch den Druckabbau im Primärraum 54 und die über den Stößel 62 eingeleitete Rückstellkraft der Kupplung selbst, fährt der Verstärkerkolben 60 zurück, d.h. in Figur 3 nach links. Bei Ausfall der Druckluft kann mit erhöhter Fußkraft gekuppelt werden, wobei der über den Hydraulikanschluss 14 eingesteuerte Hydraulikdruck die Kolbenstange 18 direkt beaufschlagt.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Kupplungskraftverstärker
- 12: Gehäuse
- 14: Hydraulikanschluss
- 16: Hydraulikraum
- 18: Kolbenstange
- 20: Hydraulikdurchgänge
- 22: Steuerkolben
- 24: Membran
- 26: Führungshülse
- 28: Führungshülse
- 30: Rückstellfeder
- 32: Ventilsitz
- 34: Ventilteller
- 36: Entlüftungsdurchgang
- 38: Steuerraum
- 40: Hülse
- 42: Rückstellfeder
- 44: Ventilsitz
- 46: Entlüftung
- 48: Führungshülse
- 50: Pneumatikeingangsraum
- 52: Pneumatikdurchgangsmündung
- 54: Primärraum
- 56: Dichtungen
- 58: Feder
- 60: Verstärkerkolben
- 62: Stößel
- 64: Stützscheibe
- 66: Kunststoffscheibe
- 68: Dichtung
- 70: Sekundärraumentlüftung
- 110: Kupplungskraftverstärker
- 114: Hydraulikanschluss
- 116: Hydraulikraum
- 118: Kolbenstange
- 120: Hydraulikdurchgang
- 122: Steuerkolben
- 130: Rückstellfeder
- 132: Ventilsitz
- 134: Ventilteller
- 138: Steuerraum
- 140: Hülse
- 144: Ventilsitz
- 146: Pneumatikausgang
- 150: Pneumatikeingang
- 152: Pneumatikdurchgangsmündung
- 154: Primärraum
- 160: Verstärkerkolben
- 162: Stößel
- 172: Pneumatikdurchgang
- 174: Nutring
- 176: O-Ringdichtungen

## Patentansprüche

1. Kupplungskraftverstärker (10), mit:
- einem Verstärkerkolben (60), der mittels Pneumatikdruck verschiebbar ist, um eine Kupplungskraft zu verstärken, und
- einem Steuerkolben (22), der mittels Hydraulikdruck verschiebbar ist und über dessen Stellung der Pneumatikdruck steuerbar ist, mit dem der Verstärkerkolben (60) beaufschlagbar ist,
**dadurch gekennzeichnet, dass** sich die Richtung, in der der Steuerkolben (22) verschiebbar ist, von der Richtung, in der der Verstärkerkolben (60) verschiebbar ist, unterscheidet.

2. Kupplungskraftverstärker (10) gemäß Anspruch 1, **dadurch gekennzeichnet, dass** die Richtung, in der der Steuerkolben (22) verschiebbar ist, und die Richtung, in der der Verstärkerkolben (60) verschiebbar ist, einen Winkel (α) zwischen 45 und 135 Grad einschließen.

3. Kupplungskraftverstärker (10) gemäß einem der vorhergehenden Ansprüche, **dadurch gekennzeichnet, dass** die Richtung, in der der Steuerkolben (22) verschiebbar ist, und die Richtung, in der der Verstärkerkolben (60) verschiebbar ist, einen Winkel (α) zwischen 80 und 100 Grad einschließen.

4. Kupplungskraftverstärker (10) gemäß einem der vorhergehenden Ansprüche, **dadurch gekennzeichnet, dass** die Richtung, in der der Steuerkolben (22) verschiebbar ist, und die Richtung, in der der Verstärkerkolben (60) verschiebbar ist, einen Winkel (α) zwischen 85 und 95 Grad einschließen.

5. Kupplungskraftverstärker (10) gemäß einem der vorhergehenden Ansprüche, **dadurch gekennzeichnet, dass** die Richtung, in der der Steuerkolben (22) verschiebbar ist, senkrecht zur Richtung ist, in der der Verstärkerkolben (60) verschiebbar ist.

6. Kupplungskraftverstärker (10) gemäß einem der vorhergehenden Ansprüche, **dadurch gekennzeichnet, dass** der Raum, in dem der Steuerkolben (22) aufgenommen ist, über eine Membran (24) gegen einen Hydraulikraum (16) zur Aufnahme von Hydraulikflüssigkeit abgedichtet ist mittels der der Steuerkolben (22) zur Steuerung des Pneumatikdrucks beaufschlagbar ist.

7. Kupplungskraftverstärker (10) gemäß einem der vorhergehenden Ansprüche, **dadurch gekennzeichnet, dass** zur Führung des Steuerkolbens (22) zumindest eine Führungshülse (26) zwischen dem Steuerkolben (22) und einem Gehäuse (12) des Kupplungskraftverstärkers (10) vorgesehen ist.

8. Kupplungskraftverstärker (10) gemäß Anspruch 7, **dadurch gekennzeichnet, dass** die Führungshülse (26) aus Kunststoff hergestellt ist.

9. Kupplungskraftverstärker (10) gemäß Anspruch 6 und 7, **dadurch gekennzeichnet, dass** die Membran (24) durch die Führungshülse (26) fixiert wird.

10. Kupplungskraftverstärker (10) gemäß einem der vorhergehenden Ansprüche, **dadurch gekennzeichnet, dass** ein Hydraulikdurchgang (20), zum einseitigen Beaufschlagen der Membran (24) mit Hydraulikdruck, in der Richtung verläuft, in der der Steuerkolben (22) verschiebbar ist.

11. Kupplungskraftverstärker (10) gemäß einem der vorhergehenden Ansprüche, **dadurch gekennzeichnet, dass** der Verstärkerkolben (60) des Weiteren durch eine Kolbenstange (18) betätigbar ist, welche wiederum mit demselben Hydraulikdruck beaufschlagbar ist wie der Steuerkolben (22).
